# EUROPÄISCHE PATENTSCHRIFT

(11) **EP 3 108 150 B1**
(45) Veröffentlichungstag und Bekanntmachung des Hinweises auf die Patenterteilung: **06.06.2018**
(21) Anmeldenummer: 15716713.1
(22) Anmeldetag: 10.02.2015
(51) Int. Cl.: F16C 7/02, F16C 7/00

(54) **AUSFALLDETEKTION FÜR ZUG-DRUCK-STANGEN MIT RESERVELASTPFAD**
FAILURE DETECTION FOR PUSH-PULL RODS HAVING A RESERVE LOAD PATH
DÉTECTION DE DÉFAILLANCE DE BARRES DE TRACTION-COMPRESSION AVEC CHEMIN DE CHARGE DE RÉSERVE

(30) Priorität: 18.02.2014 DE 202014001394 U
(43) Veröffentlichungstag der Anmeldung: 28.12.2016
(73) Patentinhaber: GMT Gummi-Metall-Technik GmbH, 77815 Bühl (DE)
(72) Erfinder: UHL, Albert, 77815 Bühl (DE)
(74) Vertreter: Miller, Andreas
(86) Internationale Anmeldenummer: PCT/DE2015/000062
(87) Internationale Veröffentlichungsnummer: WO 2015/124132

(56) Entgegenhaltungen:
- EP-A2- 2 607 229
- DE-A1- 3 111 698
- US-A- 3 526 951
- US-A1- 2011 210 229
- US-A1- 2012 132 493

## Beschreibung

Im Flugzeugbau werden für die verschiedensten Anwendungen in den sicherheitsrelevanten Bereichen, insbesondere in den Flügeln, Bauteile benötigt, die störungsfrei und ausfallsicher bzw. die im Falle von Schäden über Ersatzvorrichtungen verfügen, die den Ausfall des beschädigten Teils des Bauteils selbsterkennend, automatisch und sicher ersetzen, d.h. deren Funktion nach dem "Fail-safe"-Prinzip ausgelegt sein muss. "Fail-safe" bedeutet in diesem Zusammenhang, dass im betreffenden Bauteil mindestens zwei gleichwertige Systeme vorhanden sind, die die vorgegebene Aufgabe des Bauteils erfüllen können, wobei immer nur eines der beiden Systeme wirken darf. Fällt das erste System aus, muss seine Funktion automatisch vom zweiten System gleichwertig übernommen werden. Hierbei ist besonders wichtig, dass der Ausfall des ersten Systems selbsttätig vom Bauteil festgestellt und behoben werden kann.
Diese Anforderungen gelten insbesondere für die im Flugzeugbau umfangreich zum Einsatz kommenden Zug-Druck-Stangen, die aufgrund der starken und häufig wechselnden Belastungen besonders beansprucht werden, sodass Totalausfälle durch Materialermüdung oder Überlast ausgeschlossen werden müssen.
Derzeit wird diesen Anforderungen dadurch begegnet, dass bei häufigen Wartungsintervallen vorsorglich die Zug-Druck-Stangen mit einer bestimmten Einsatzdauer routinemäßig ausgetauscht bzw. ausgebaut, zerlegt, geprüft, erneut zusammengesetzt und wieder eingebaut werden, was aber naturgemäß mit einem erheblichen Zeit- und Kostenaufwand verbunden ist.
Die besonders im Flugzeugbau üblichen Zug-Druck-Stangen sind in verschiedenen Variationen bekannt, so beispielsweise aus DE 202004016321 U. In der Regel besitzen diese rohrförmigen einschalige Körper aus Leichtmetall, Titan oder karbonfaserverstärktem Kunststoff, die an beiden Enden mit je einer einschichtigen Gabel oder Auge aus Leichtmetall versehen ist. Aus der EP 2 607 229 ist auch eine zweischalig aufgebaute Zug-Druck-Stange bekannt. Die Aufgabe der Erfindung ist es daher, eine einerseits störungsfreie und ausfallsichere Zug-Druck-Stange mit zunächst nicht wirksamen Reservesystem zur Verfügung zu stellen, die Beschädigungen bzw. Funktionsausfälle selbsttätig erkennt, eigenständig behebt und andererseits die Funktionsübernahme durch das Reservesystem eindeutig und leicht erkennbar anzeigt, sodass sie bei den routinemäßigen Kontrollwartungen mit geringem Aufwand an Zeit und Kosten auf Ihre Funktion kontrolliert und bei Bedarf ersetzt werden kann. Diese Aufgabe wurde wie folgt gelöst.

Da naturgemäß nach der Logik der Ausfallsicherheit diese nur erreicht werden kann, wenn jeweils nur ein definierter Lastpfad die Lasten aufnimmt, muss die Zug-Druckstange so aufgebaut sein, dass diese zwei voneinander getrennt arbeitende Lastpfade aufweist, die so zu einander in Bezug gesetzt werden, dass jeweils nur ein Lastpfad die Kraftübertragung aufnimmt und nur bei Ausfall des ersten Lastpfades der zweite Lastpfad diese Aufgabe übernimmt. Unter Lastpfad im Sinne der Erfindung ist dabei die Gesamtheit der Einzelteile der Zug-Druck-Stange zu verstehen, die dazu bestimmt sind, die auf diese einwirkenden Kräfte aufzunehmen. Diese sind der rohrförmige Körper und die beidseitigen am Körper angebrachten Gabelenden.

Das Ziel der Erfindung, nämlich einerseits die Ausfallsicherheit durch selbsttätiges Erkennen der Beschädigung und deren selbsttätige Behebung zu gewährleisten und andererseits den Ausfall des ersten Systems von außen detektierbar zu machen, wird dadurch erreicht, dass Rohrkörper und beide Gabeln einen zweischaligen (zweischichtigen) Aufbau erhalten. Beide Schalen (Schichten) können aus denselben üblichen Werkstoffen wie Leichtmetall, Titan oder karbonfaserverstärktem Kunststoff gefertigt werden. Die Anordnung der beiden Schalen bzw. Schichten hat so zu erfolgen, dass die den Lastpfad 1 bildende Schicht in der Gabel innen, im Rohrkörper aber außen angeordnet wird, während es sich bei der den Lastpfad 2 (Bauteil 2) bildenden Schicht genau umgekehrt verhält, Dabei trennt die in der Gabel außen liegende, den Lastpfad 2 bildende Schicht im Übergangsbereich zwischen Rohr und Gabel die in der Gabel innen liegende Schicht des Lastpfads 1 (Bauteil 1) von der im Rohr außen liegenden Schicht des Lastpfads 1 (Bauteil 1). Diese Anordnung ist so gewählt, da durch die Wahl der Innenseite der Gabel für den Lastpfad 1 dieser bei Versagen eindeutig detektierbar ist. Das gleiche gilt für die Wahl der Außenseite des Rohrkörpers für den Lastpfad 1.

Um zu gewährleisten, dass immer nur ein Lastpfad zum Einsatz kommt, muss die Anbindung der Kraftübertragung wie folgt ausgeführt werden. In beiden Gabeln und im Rohrkörper der Zug-Druck-Stange sind jeweils auf beiden Seiten diagonal je eine Bohrung D1 (7) und D2 (8) durch die Lastpfade 1 und 2 (Bauteile 1 und 2) angebracht, durch die beidseitig je ein Bolzen 9 führt, der der Kraftübertragung dient und dessen Stärke von der zu erwartenden Belastung abhängig ist. Die Bohrung 7 wird dabei mit geringfügig kleinerem Durchmesser (ca. 0,5-1mm) als die Bohrung 8 ausgeführt, sodass die auftretenden Kräfte zunächst nur über die Bohrung 7 mit dem kleineren Durchmesser durch den kraftschlüssigen Kontakt auf den Lastpfad 1 (Bauteil 1) übertragen werden. Dieser Aufbau ist zwingend erforderlich, da nur so die Erkennung (Detektion) des eventuell später eintretenden Ausfalls des ersten Lastpfades (Bauteil 1) möglich ist und gleichzeitig der (Reserve) Lastpfad 2 (Bauteil 2) zunächst nicht belastet wird.

Nach der selbsttätigen Detektion des Ausfalls des Lastpfades 1 (Bauteil 1) infolge Beschädigung wird nun der Einsatz des Lastpfades 2 (Bauteil 2) wie folgt vom System von sich aus bewerkstelligt. Durch den Ausfall der Kraftaufnahme durch den Lastpfad 1 (Bauteil 1) verschiebt sich unter der Krafteinwirkung F auf die Bohrung 7 der Bauteil 1 gegenüber dem Bauteil 2. Die Verschiebung ist beendet sobald der Durchmesser der Bohrung 7 den Durchmesser der Bohrung 8 erreicht hat mit dem Ergebnis, dass nunmehr nur noch der Bauteil 2, also der Lastpfad 2 durch den kraftschlüssigen Kontakt mit der Bohrung 8 die Kraft aufnimmt.

Weiterer wesentlicher Teil der Erfindung ist nun, dass bei den regelmäßig stattfindenden Kontrollwartungen der Ausfall des Bauteils bzw. Lastpfades 1 durch den Wartungstechniker ebenfalls erkannt bzw. detektiert werden kann, damit der dann notwendige Austausch vorgenommen wird. Dies geschieht auf überraschend einfache Weise mittels der Kontrollbohrung 3 mit einem Durchmesser von ca 4-6mm und mit Hilfe des Prüfdorns 4, der zwingend zum Werkzeug des Wartungstechnikers gehört. Durch die Verschiebung des Bauteils 1 gegenüber dem Bauteil 2 wird durch die Krafteinwirkung F die Kontrollbohrung 3 so deformiert, dass der im unbeschädigten Zustand der Kontrollbohrung passgenaue Prüfdorn 4 durch den Wartungstechniker wegen der irreversiblen Verformung nicht mehr in die Kontrollbohrung 3 der Bauteile 1 und 2 eindringen kann.

Voraussetzung hierfür ist, dass die Kontrollbohrung 3 als Hülse mit sehr geringer Wandstärke ausgeführt ist. Des Weiteren muss diese aus einem sehr duktilen Werkstoff (wie Titan Grad 1 oder austenitischer Edelstahl) mit geringer Festigkeit bestehen. Somit ist sichergestellt, dass schon unter geringer Krafteinwirkung F eine bleibende und damit von außen durch ein Prüfgerät detektierbare Verformung der Kontrollbohrung 3 entsteht.

So kann der Ausfall des Lastpfades 1 bei der Wartung von außen eindeutig detektiert und der Austausch der Zug-Druck-Stange wegen Ausfall des Lastpfades 1 veranlasst werden.

Die Erfindung wird nachfolgend anhand eines bevorzugten Ausführungsbeispiels näher erläutert.

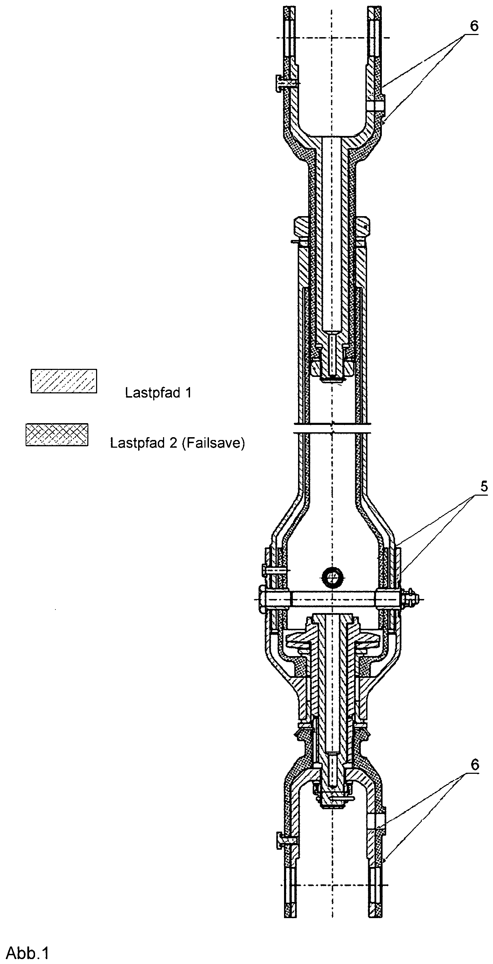

Abbildung 1 zeigt eine komplette Zug-Druck-Stange, bestehend aus dem Rohrkörper 5 und den Gabeln 6, diese wiederum bestehend aus den Bauteilen 1 und 2, die jeweils den Lastpfad 1 bzw. Lastpfad 2 bilden. Zur leichteren Erkennbarkeit sind die Bauteile des Lastpfades 1 in Gabel und Rohrkörper schräg schraffiert, diejenigen des Lastpfades 2 kreuzweise schraffiert.

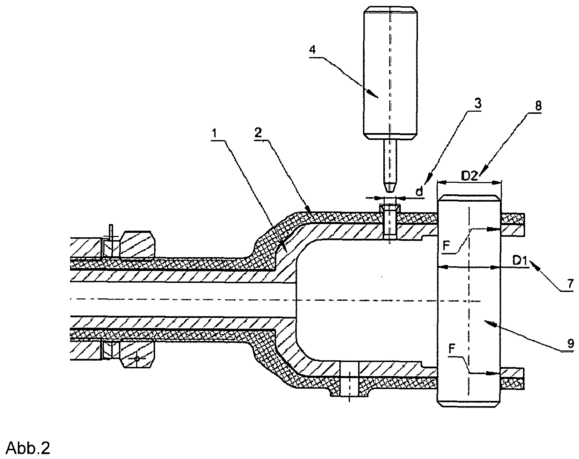

Die Abbildung 2 zeigt die Gabel 6 mit der Bohrung D1 (7) sowie der Bohrung D2 (8) zusammen mit dem kraftübertragenden Bolzen 9, der mit der Bohrung D1 (7) vorzugsweise über eine Spielpassung kraftschlüssig verbunden ist. Hierbei ist die Bohrung D1 (7) geringfügig kleiner ausgebildet als die Bohrung D2 (8). Ferner zeigt die Abbildung 2 die Kontrollbohrung 3, die dazu dient, die Beschädigung des Bauteils 1 und damit den Ausfall des Lastpfades 1 anzuzeigen.

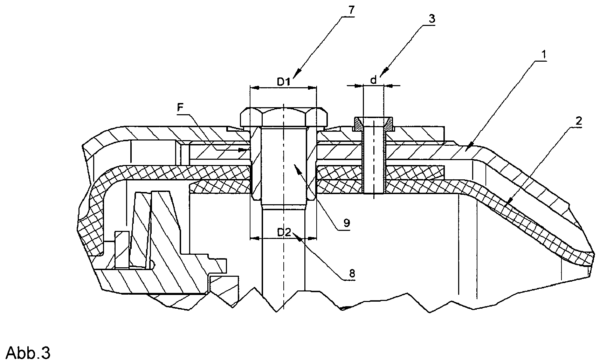

Die Abbildung 3 zeigt den Aufbau des Rohrkörpers 5, zusammen mit der Bohrung D1 (7) die ebenfalls einen geringfügig geringeren Durchmesser aufweist als die Bohrung D2 (8), allerdings mit der Maßgabe, dass nunmehr das Bauteil 1 (Lastpfad 1) außen und das Bauteil 2 (Lastpfad 2) innen liegen. Ferner zeigt die Abbildung 3 die Kontrollbohrung 3, die dazu dient, die Beschädigung des Bauteils 1 und damit den Ausfall des Lastpfades 1 anzuzeigen.

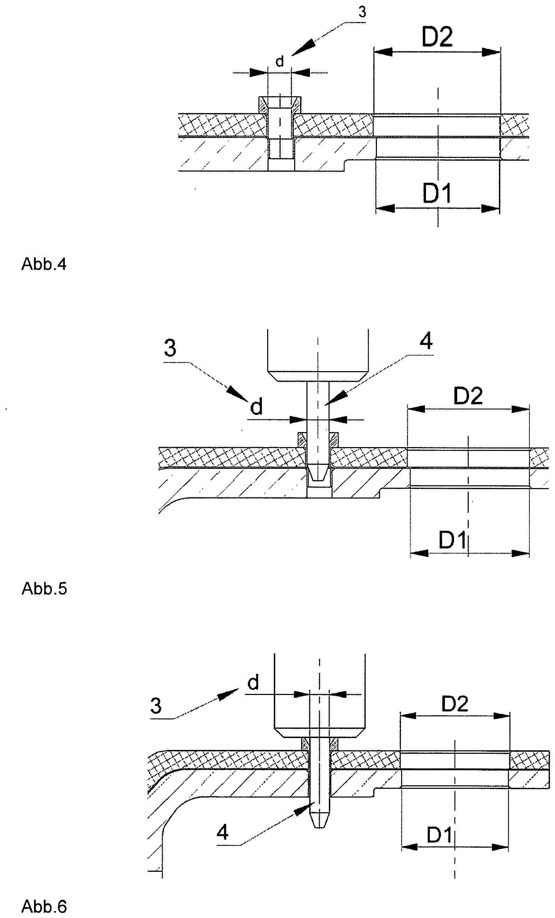

Abbildung 4 zeigt die Kontrollbohrung 3 im Zustand der Beschädigung. Hierbei ist nun durch den Ausfall des Lastpfades 1 die Bohrung D1 auf die Bohrung D2 verschoben worden. Dies bewirkt die bleibende Deformation der Kontrollbohrung 3.
Abbildung 5 zeigt die Kontrollbohrung 3 im Zustand der Beschädigung zusammen mit dem Prüfdorns 4 während der Kontrolle. Hier ist nun zu sehen, dass der Prüfdorns 4 nicht mehr in die Kontrollbohrung 3 eingeführt werden kann. Somit ist der Ausfall des Lastpfades 1 eindeutig detektiert.
Abbildung 6 zeigt die Kontrollbohrung 3 im unbeschädigten Zustand. Hier kann der Prüfdorns 4 bis zum Anschlag in die Kontrollbohrung 3 eingeführt werden. Somit ist sichergestellt, dass der Lastpfades 1 keine Beschädigung aufweist.

### Legende zu Gebrauchsmuster "Ausfalldetektion für Zug-Druck-Stangen mit Reserve-Lastpfad"

1. Bauteil 1 (Lastpfad 1)
2. Bauteil 2 (Lastpfad 2)
3. Kontrollbohrung
4. Prüfdorn
5. Rohrkörper
6. Gabel
7. Bohrung D 1
8. Bohrung D 2
9. Bolzen der Bohrung D 1/D2

## Patentansprüche

1. Zweischalig aufgebaute Zug-Druck-Stange aus Leichtmetall, Titan oder karbonfaserverstärktem Kunststoff, bestehend aus: erster Schicht (1), die den Lastpfad 1 bildet, der in den Gabeln (6) der Zug-Druck-Stange innen und im Rohrkörper (5) außen angeordnet ist und zweiter Schicht (2), die den Lastpfad 2 bildet der in den Gabeln (6) außen und im Rohrkörper (5) innen angeordnet ist, wobei die zweite Schicht (2) im Übergangsbereich zwischen Rohrkörper (5) und Gabeln (6) die in den Gabeln(6) innen liegende erste Schicht (1) von der im Rohrkörper (5) außen liegenden ersten Schicht (1) trennt, wobei die Gabeln (6) und Rohrkörper (5) der Zug-Druck-Stange auf beiden Seiten diagonal je eine Bohrung D1 (7) und D2 (8) durch die erste und die zweite Schichten (1 und 2) der Zug-Druck-Stange enthalten, durch die Bolzen (9) zwecks Kraftübertragung führen,
**dadurch gekennzeichnet, dass** die Bohrung D 1 (7) einen 0,5 bis 1 mm geringeren Durchmesser als die Bohrung D 2 (8) aufweist und der Bolzen (9) im Ausgangsstadium nur kraftschlüssigen Kontakt mit der Bohrung D1 (7) hat.

2. Zug-Druck-Stange nach Anspruch 1 **dadurch gekennzeichnet, dass** zusätzlich neben den Bohrungen D1 (7) und D2 (8) im Rohrkörper (5) und in den Gabeln (6) der Zug-Druck-Stange eine Kontrollbohrung (3) durch die erste (1) und die zweite (2) Schichten als Hülse mit sehr geringer Wandstärke aus sehr duktilem Werkstoff angebracht ist und somit bei schon geringer Krafteinwirkung die Hülse irreversibel so verformt wird, dass ein passgenauer Prüfdorn (4) nicht mehr in die Kontrollbohrung (3) eingeführt werden kann.

3. Zug-Druck-Stange nach Anspruch 2, **dadurch gekennzeichnet, dass** die Kontrollbohrung (3) einen Durchmesser von ca. 4-6 mm hat.

4. Zug-Druck-Stange nach Anspruch 2, **dadurch gekennzeichnet, dass** die Hülse der Kontrollbohrung (3) aus Titan Grad 1 besteht.

5. Zug-Druck-Stange nach Anspruch 2, **dadurch gekennzeichnet, dass** die Hülse der Kontrollbohrung (3) aus austenitischem Edelstahl besteht.

## Claims

1. A double-wall push-pull rod made from light alloy, titanium or carbon fiber-reinforced plastic, comprising: a first layer (1), forming a first load path, located in yokes (6) of an inside of the push-pull rod and on an outside of a tubular body (5) and a second layer (2), forming a second load path, located on an outside of the yokes (6) and on an inside of the tubular body (5), wherein the second layer (2) separates in a transition area between the tubular body (5) and the yokes (6), the first layer (1) of the first load path on the inside of the yokes (6) from the first layer (1) of the first load path on the outside of the tubular body (5), wherein on both sides diagonally the yokes (6) and tubular body (5) of the push-pull rod include a first hole D1 (7) and a second hole D2 (8) through the first and second layers (1 and 2), wherein at least one bolt (9), configured to transmit load, leads through the holes (7 and 8), wherein the first hole D1 (7) has a 0,5 to 1 mm smaller diameter than the second hole D2 (8) and wherein the bolt (9) in an original stage has only force-fitting contact with the first hole D1 (7).

2. The push-pull rod according to claim 1, further comprising alongside the first and second holes D1 (7) and D2 (8) in the tubular body (5) and in the yokes (6) of the push-pull rod an inspection hole (3), disposed through both, the first (1) and second (2) layers as a sleeve with a low wall thickness from very ductile material, such that with even a small application of force the sleeve is irreversibly so deformed so that a precisely fitting test mandrel (4) can no longer be inserted into the inspection hole (3).

3. The push-pull rod according to claim 2, wherein the inspection hole (3) has a diameter in a range of from 4 to 6 mm.

4. The push-pull rod according to claim 2, wherein the sleeve comprises grade 1 titanium.

5. The push-pull rod according to claim 2, wherein the sleeve comprises austenitic stainless steel.

## Revendications

1. Barre de traction-compression à double paroi en métal léger, titane ou plastique renforcé de fibres de carbone, composé de : une première couche (1) formant le chemin de charge 1 disposé à l'intérieur dans les fourches (6) de la barre traction-compression et à l'extérieur dans le corps du tuyau (5) et une deuxième couche (2) formant le chemin de charge 2 disposé à l'extérieur dans les fourches (6) et à l'intérieur dans le corps du tuyau (5), la seconde couche (2) dans la zone intermédiaire entre le corps du tuyau (5) et les fourches (6) séparant alors la première couche (1) située à l'intérieur des fourches (6) de la première couche extérieure (1) dans le corps du tuyau, les fourches (6) et le corps du tuyau (5) de la barre traction-compression comprenant respectivement un alésage D1 (7) diagonal et un alésage D2 (8) sur les deux côtés perçant la première et deuxième couches (1 et 2) de la barre traction-compression ; des boulons (9) sont alors guidés à travers ces alésages pour la transmission de puissance, les alésages se démarquent par le fait que l'alésage D1 (7) présente un diamètre inférieur de 0,5 à 1,0 mm à celui de l'alésage D2 (8) et que le boulon (9) au stade initial ne se trouve qu'en liaison par force avec l'alésage D1 (7).

2. Barre de traction -compression selon la revendication 1 se démarque par le fait qu'en plus des alésages D1 (7) et D2 (8) dans le corps du tuyau (5) et dans les fourches (6) de la barre traction-compression, un alésage de contrôle (3) à travers la première (1) et deuxième (2) couches a été appliqué sous forme de douille d'une épaisseur de paroi très faible en un matériau très ductile et que la douille est déformée de manière irréversible dès l'application d'une force très réduite de manière à ce qu'un mandrin de contrôle (4) fait sur mesure ne puisse plus être inséré dans l'alésage de contrôle.

3. Barre de traction -compression selon la revendication 2, se démarque par le fait que l'alésage de contrôle (3) a un diamètre d'environ 4 à 6 mm.

4. Barre de traction -compression selon la revendication 2, se démarque par le fait que la douille de l'alésage de contrôle (3) est composée de titane grade 1.

5. Barre de traction -compression selon la revendication 2, se démarque par le fait que la douille de l'alésage de contrôle (3) est composé d'acier inoxydable austénitique.
